# EUROPÄISCHE PATENTSCHRIFT

(11) **EP 1 745 248 B1**
(45) Veröffentlichungstag und Bekanntmachung des Hinweises auf die Patenterteilung: **01.07.2015**
(21) Anmeldenummer: 05753179.0
(22) Anmeldetag: 13.05.2005
(51) Int. Cl.: F25B 5/02, F25B 9/00, F25D 23/02, F25B 39/02, F25D 23/06

(54) **KÜHLSYSTEM UND VERFAHREN ZUR HERSTELLUNG EINER VERDAMPFERPLATINE FÜR EIN TIEFTEMPERATURKÜHLSYSTEM**
COOLING SYSTEM AND METHOD FOR PRODUCING AN EVAPORATION PLATE FOR A LOW-TEMPERATURE COOLING SYSTEM
SYSTEME DE REFROIDISSEMENT ET PROCEDE POUR REALISER UNE PLATINE D'EVAPORATION POUR SYSTEME DE REFROIDISSEMENT BASSE TEMPERATURE

(30) Priorität: 14.05.2004 DE 202004007836 U
(43) Veröffentlichungstag der Anmeldung: 24.01.2007
(73) Patentinhaber: DOMETIC S.a.r.l., 9808 Hosingen (LU)
(72) Erfinder: PINTO, Admilson, 54298 Aach (DE); BILLEN, Stephan, 54636 Baustert (DE); WAGNER, Günter, 54619 Leidenborn (DE)
(74) Vertreter: Grosse Schumacher Knauer von Hirschhausen
(86) Internationale Anmeldenummer: PCT/EP2005/005265
(87) Internationale Veröffentlichungsnummer: WO 2005/111518

(56) Entgegenhaltungen:
- EP-A- 0 702 200
- EP-A- 1 093 868
- DE-A1- 3 000 177
- DE-A1- 19 524 277
- FR-A- 2 791 290
- GB-A- 2 225 630
- US-A- 1 946 496
- US-A- 2 795 113
- US-A- 4 315 416
- PATENT ABSTRACTS OF JAPAN Bd. 010, Nr. 200 (M-498), 12. Juli 1986 (1986-07-12) & JP 61 041897 A (SHOWA ALUM CORP), 28. Februar 1986 (1986-02-28)

## Beschreibung

Die Erfindung betrifft ein Kühlsystem umfassend ein wärmeisolierendes Außengehäuse und ein Kühlaggregat mit einem Verdampfer, der flächig ausgebildet ist, sowie ein Verfahren zur Herstellung einer Verdampferplatine für ein derartiges Kühlsystem.

Zur Kühlung des Innenraums herkömmlicher Kühlgeräte stehen unterschiedliche Kühlaggregate zur Verfügung. Im Wesentlichen beruht das Funktionsprinzip eines Kühlaggregats auf der Nutzung physikalischer Effekte und thermodynamischer Kreisprozesse. Bspw. wird beim Kaltdampfprozess ein leicht siedendes, flüssiges Kältemittel zwischen zwei verschiedenen Drücken und dazugehörigen Siedetemperaturen geführt. Die zur Verdampfung des flüssigen Kältemittels benötigte Wärmeenergie (Verdampfungswärme) wird der Umgebung entzogen, die so eine Abkühlung erfährt. Auf diese Weise wird dem Kühlraum durch direkte Verdampfung Wärme entzogen.

Das Kühlaggregat weist im Allgemeinen einen Verdampfer auf, in dem sich das siedende Kältemittel befindet. Bei herkömmlichen Kühlsystemen, bspw. bei Kompressorkühlschränken, besteht der Verdampfer im Wesentlichen aus schlangenförmig ausgestalteten Kanälen oder Röhren, die im Gehäuse angeordnet werden. Solch ein Verdampfer ist nach dem Oberbergriff des Anspruchs 1 aus DE 19524277 bekannt. Insbesondere weisen die Gehäuse eine Außen- und eine Innenwand auf, zwischen denen der Verdampfer, in der Regel an der rückwärtigen Seite des Kühlraums, angeordnet ist. Häufig wird der Verdampfer in seiner Position zwischen Außen- und Innengehäuse mit einem Isolationsmaterial, vorzugsweise mit aushärtendem Schaumstoff, fixiert.

Nachteilig an diesen bekannten Kühlsystemen ist jedoch, dass durch die Anordnung der Verdampferkanäle im Isolierschaum der Wärmeübergang zwischen Verdampfer und Kühlraum beeinträchtigt und somit die Effizienz der Kühlleistung des Geräts verringert wird, da die Kühlung des Innenraums des Kühlgeräts über zwei Materialgrenzen erfolgt. Der Kühleffekt tritt erst zeitlich verzögert ein.

Alternativ dazu sind Ausführungsformen bekannt, bei denen ein Verdampfer mit schlangenförmig auf einer Platte angeordneten Leitungen verwendet wird. Die Platte kann direkt an den Innenraum des Kühlgeräts angrenzen. So werden in herkömmlichen Gefrierfächern und Tiefkühltruhen (bis -30°C) Kupfer-, Aluminium- oder Stahlrohrschlangen auf Aluminium- bzw. Stahlblech aufgewickelt. Im Tieftemperaturbereich (mit Verdampfungstemperaturen bis -100°C) sind vor allem Innenbehälter aus Stahlblech mit aufgewickelter Kupferrohrschlange im Einsatz. Diese Lösung ist jedoch konstruktiv sehr aufwendig. Außerdem wird keine optimale Energieübertragung gewährleistet. Ein weiteres Beispiel für einen bekannten Verdampfer sind in Kunststoff eingebettete Rohrschlangen, mit denen ebenfalls nicht die nötige Effizienz zu erzielen ist. Eine homogene Kälteverteilung im Kühlraum ist erst nach längerer Zeit und unter höherem Energieaufwand realisierbar. Naturgemäß ist in Richtung der Zugangsöffnung eine absinkende Temperatur zu beobachten.

Insgesamt bleibt festzuhalten, dass herkömmliche Verdampfer durch ihre Anordnung im Kühlraum ihrer Umgebung nur in einem örtlich begrenzten Bereich Wärme entziehen. Eine homogene Temperaturverteilung im Kühlraum sowie hohe Kühlleistungen sind damit nur schwer und unter hohem Energieaufwand zu erbringen. Der Kühleffekt tritt in der Regel zeitlich verzögert auf.

Insbesondere bei Kühlsystemen, die für den Tieftemperaturbereich ausgelegt sind, z.B. für einen Temperaturbereich zwischen -80°C und -90°C, führt dies zu Problemen, diese tiefen Temperaturen mit akzeptablem Energieaufwand zu erreichen und zu halten.

Ein weiteres Problem tritt bei im Tieftemperaturbereich arbeitenden Kompressorkühlschränken auf. Das Kompressoröl gelangt zwangsläufig in bestimmten Mengen in das Kältemittel und damit in den Verdampfer. Wegen der sehr niedrigen Temperaturen kann sich das Öl im Verdampfer absetzen. Dadurch sinkt dessen Wärmeübertragungseffizienz des Verdampfers. Im schlimmsten Fall kann der Verdampfer mit der Zeit für den angegebenen Temperaturbereich gänzlich unbrauchbar werden.

Ausgehend davon besteht die Aufgabe der vorliegenden Erfindung darin, ein Kühlsystem mit hoher Effizienz des Wärme- bzw. Kälteübergangs und hohem Wirkungsgrad bereitzustellen, wobei eine homogene Temperaturverteilung im Kühlraum sichergestellt werden kann. Insbesondere soll das Kühlsystem im Tieftemperaturbereich, insbesondere im Bereich zwischen -80°C und -90°C, dauerhaft einsetzbar sein.

Eine weitere Aufgabe der Erfindung ist es, ein einfaches kostengünstiges Herstellungsverfahren für die Fertigung eines effektiven Verdampfers für das Kühlsystem vorzuschlagen.

Diese Aufgaben werden gelöst durch ein Kühlsystem gemäß Anspruch 1 und ein Herstellungsverfahren gemäß Anspruch 16.

Das erfindungsgemäße Kühlsystem umfasst ein wärmeisolierendes Außengehäuse und ein Kühlaggregat mit einem Verdampfer, der wenigstens eine flächig ausgebildete Verdampferplatine aufweist, die wenigstens zwei Platten umfasst, die so geformt und aneinander gefügt sind, dass zwischen den Platten ein Kanal für ein Kältemittel ausgebildet ist.

Der zwischen den Plattenflächen ausgebildete Kanal wird großflächig vom Kältemittel durchflossen. Auf diese Weise wird eine homogene Temperaturverteilung über die Plattenfläche und somit eine homogene Kühlung des Innenraums des Kühlgeräts erreicht. Die Kanäle sind so ausgebildet, dass der Druckabfall bzw. die Druckdifferenz im Verdampfer minimiert wird. Neben der einfachen Konstruktion wird eine hohe Temperaturhomogenität und - stabilität und somit ein hoher Wirkungsgrad des Kühlsystems erreicht. Daher ist das Kühlsystem insbesondere für die Erzeugung sehr tiefer Temperaturen, auch im Bereich von unter -80° C, geeignet.

Die Platten sind durch Verschweißen miteinander verbunden.

Die Platten sind durch Schweißnähte miteinander verbunden. In einem Randbereich der Platten ist eine umlaufende Schweißnaht ausgebildet, so dass der Kanal auf die Plattenfläche begrenzt und nach außen hin abgegrenzt ist. Weitere Schweißlinien sind so angeordnet, dass eine Kanalführung bereitgestellt wird, die den Problemen des Druckabfalls im Verdampfer sowie der unvollständigen Rückführung von Kompressoröl entgegenwirkt. Zusätzliche Schweißpunkte verbessern die Verteilung des Kältemittels über die Plattenoberfläche innerhalb des Kanals, so dass eine große und homogene Verdampfungsfläche mit exzellenter Wärmeübertragung zwischen dem Innenraum des Kühlgeräts und dem Verdampfer entsteht. Statt der Schweißpunkte können auch anders geformte Verschweißungen, z.B. kreisförmige Schweißnähte, vorgesehen werden. Diese Verschweißungen verleihen dem Verdampfer zusätzliche mechanische Stabilität.

Die Schweißnähte sind erfindungsgemäß derart angeordnet, dass der zwischen den Platten ausgebildete Kanal für das Kältemittel im Wesentlichen schlangenartig bzw. mäanderartig verläuft.

Die Schweißnähte, die den Kanal abgrenzen, sind erfindungsgemäß so angeordnet bzw. geneigt, dass das Kältemittel unter dem Einfluss der Schwerkraft ohne Rückstau abfließen kann. Auf diese Weise wird das mit dem Kältemittel transportierte Kompressoröl zurückgeführt. Dazu können in den seitlich im Innenraum des Kühlgeräts (d.h. vertikal) angeordneten Platinen die Kanalabtrennungen in der Durchflussrichtung des Kältemittels nach unten geneigt sein, so dass eine möglichst vollständige Olrückführung gegeben ist.

Die Verdampferplatine weist insbesondere wenigstens einen Einlass für das Kältemittel und wenigstens einen Auslass für das Kältemittel auf. Eine an der Oberseite des Innenraums des

Kühlgeräts angeordnete Platine, die das Deckenteil des Innengehäuses bildet, weist insbesondere einen einzigen Einlass für das Kältemittel auf. Das Kältemittel wird beispielsweise an einer einzigen Stelle in der Mitte der oberen Platine eingespritzt. Der Kältemittelstrom wird in der oberen Platine zweigeteilt, um zwei seitlich im Innenraum des Kühlgeräts angeordnete vertikal ausgerichtete Platinen zu versorgen. Der hohe Massenstrom an Kühlmittel in der oberen Platine bewirkt einen effizienten Transport des mitgeführten Kompressoröls.

Wenigstens eine der Platten der Verdampferplatine ist bevorzugt aus Edelstahl, insbesondere aus rostfreiem Stahl, hergestellt.

In der Regel werden die beiden aneinander gefügten Platten der Verdampferplatine aus Edelstahl, insbesondere aus rostfreiem Stahl, hergestellt sein. Dieses Material ist für einen Verdampfer wegen seiner Stabilität geeignet. Da es sich bei dem Kältemittel um ein Hochdruckkältemittel handelt, können Kräfte auftreten, denen Edelstahl jedoch ohne weiteres standhält. Ein weiterer Vorteil der Verwendung von Edelstahlplatten besteht in der hohen Temperaturstabilität auf Grund der hohen Wärmekapazität des Materials. Dies wiederum bewirkt eine hohe Temperaturhomogenität und eine Senkung des Energieverbrauchs.

Die Platten können unterschiedliche Dicke aufweisen.

Das Kühlsystem weist insbesondere ein Innengehäuse zur Ausbildung eines Innenraumes zur Aufbewahrung kühlungsbedürftiger Güter auf. Das Innengehäuse wird wenigstens teilweise durch den flächigen Verdampfer gebildet.

Der das Innengehäuse bildende Verdampfer ist im Einzelnen aus mindestens einer, vorzugsweise aus mehreren, insbesondere aus drei Verdampferplatinen, gebildet. Diese stehen also in direktem Kontakt mit dem Innenraum des Kühlsystems. Vorzugsweise sind die Platinen U-förmig entlang linken, oberen und rechten Innenfläche des zu kühlenden Innenraums angeordnet, um die gewünschte homogene Kältewirkung sicherzustellen. Es ist jedoch auch denkbar, Platinen, je nach Einsatzzweck, auch am Boden oder an der Rückwand des Innenraums vorzusehen.

Die einzelnen Verdampferplatinen weisen dabei einen durchgehenden Verdampferkanal auf, in welchem das während der Verdampfung die Kühlwirkung erzeugende Kältemittel geleitet wird. Um eine möglichst große Oberfläche zur Verfügung zu stellen, ist der Kanal schlangenförmig ausgebildet. Insbesondere wirkt sich die Gestaltung der Innenwand des Gehäuses durch den Verdampfer bzw. die Verdampferkanäle selbst vorteilhaft aus, da durch diese Ausgestaltung des Kühlsystems der Übergang der Kälte von dem Verdampfer bzw. den Verdampferkanälen auf den Innenraum direkt, d.h. unter Einsparung der den Energiefluss negativ beeinflussenden Materialgrenze Verdampfer-Isolierschaumstoff realisiert ist. Eine Effizienzsteigerung der Kühlleistung der Geräte sowie ein verringerter Energieverbrauch sind die unmittelbare, vorteilhafte Folge, da während des Betriebes der Wärmeentzug, d.h. die Kühlung des Innenraums über lediglich eine Materialgrenze hinweg geschehen muss. Durch die Verwendung von Edelstahlplatten für den Verdampfer kann der Energieverbrauch ebenfalls gesenkt werden, da sich die Platten auf Grund ihrer hohen Wärmekapazität im Regelbetrieb nur sehr langsam erwärmen. Dadurch werden lange Kompressorverweilzeiten ermöglicht, die zu einem geringeren Energieverbrauch führen. Weiterhin als vorteilhaft ist die Ausgestaltung der Innenwand des Kühlgehäuses als Verdampfer selbst vor dem Hintergrund einer homogenen Temperaturverteilung im Gehäuseinnern zu sehen, da eine Kälteabstrahlung von mehreren Seiten erreicht wird.

Der Raum zwischen dem Außen- und dem Innengehäuse kann mit einem wärmeisolierenden Material, beispielsweise Isolierschaumstoff, ausgefüllt sein. Dadurch wird die erforderliche Kälteisolation hinsichtlich der Systemgrenze des Kühlsystems aufrecht erhalten. Gleichzeitig wirkt der flüssig eingebrachte und später aushärtende Isolierschaumstoff als Abstandshalter zwischen dem Außengehäuse und dem Verdampfer. Auch eine gewisse Haftfunktion bezüglich des innen liegenden Innengehäuses, d.h. also bzgl. des Verdampfers, ist denkbar, so dass auf weitere Fixierungseinrichtungen verzichtet werden kann. Der Kälte- bzw. Energieverlust während des Betriebes wird damit effektiv reduziert.

Die Bereiche mit einem Zwischenraum zwischen den Platten der Verdampferplatinen sind insbesondere zwischen den Schweißnähten ausgebildet. Durch geeignete Anordnung der Schweißnähte und -punkte kann dem Kanal sowohl ein optimaler Querschnitt über seine gesamte Länge, als auch eine ausreichende Stabilität verliehen werden.

Wenigstens eine der Platten ist bevorzugt plastisch so verformt, dass Bereiche mit einem Zwischenraum zwischen den Platten ausgebildet sind, die den Kanal bilden. Durch die Punktschweißungen kann der Kanalquerschnitt über seine gesamte Länge festgesetzt werden, um optimale Durchflussbedingungen für das Kühlmittel zu erzielen. Die wenigstens eine Platte, die beim Aufbau des Kühlsystems vorzugsweise zum Innenraum des Kühlgeräts gerichtet angeordnet wird, weist durch die Deformation eine vergrößerte Fläche auf, über die ein Wärmeaustausch zwischen dem Kühlraum und dem Kältemittel stattfinden kann. Dadurch wird die Effizienz des Kühlsystems erhöht.

Der Verdampfer weist insbesondere wenigstens zwei Verdampferplatinen auf, die wenigstens teilweise die Seitenbereiche des Innengehäuses bilden. Dies führt zu einer guten Temperaturverteilung im Kühlraum ohne die Notwendigkeit einer Luftumwälzung.

Der Verdampfer weist in einer besonders bevorzugten Ausführungsform wenigstens eine weitere Verdampferplatine auf, die wenigstens teilweise den Deckenbereich des Innengehäuses bildet. Bei der Verwendung mehrerer Verdampferplatinen können diese derart ausgestaltet sein, dass das Kühlmittel gleichzeitig in die Verdampferplatinen eingebracht wird, um eine gleichmäßige Kühlwirkung zu erzeugen. Dabei weist die mindestens eine Verdampferplatine mindestens einen Zu- und mindestens einen Abfluss auf, über welche das zu verdampfende Kältemittel einerseits zuleitbar und das bereits verdampfte, nach Phasenübergang im Gaszustand vorliegende Kältemittel entnehmbar ist. Allerdings ist es auch denkbar, dass trotz der modulartigen, flexibel einzusetzenden Ausgestaltung der einzelnen Verdampferplatinen die jeweils vorgesehenen Verdampferkanäle auf den einzelnen Platinen so miteinander verbindbar sind, dass sie einen durchgehenden Kanal bilden, so dass der Dampf ungehindert durch sämtliche Platinen strömen kann und der gesamte Verdampfer als Wirkfläche zum Wärmeentzug bzw. zur Kälteabgabe zur Verfügung steht.

Wenigstens eine der seitlichen Verdampferplatinen weist Schweißnähte derart auf, dass das Kältemittel von einem im oberen Bereich der Verdampferplatine angeordneten Einlass zu einem im unteren Bereich der Verdampferplatine angeordneten Auslass ohne Rückstau abfließen kann. Bei Kompressorkühlsystemen ist es unumgänglich, dass in den Kompressoren verwendetes Öl mit dem Kältemittel vermischt und mit diesem in den Verdampfer transportiert wird. Problematisch ist, insbesondere bei sehr niedrigen Temperaturen, die Ölrückführung. Da das Öl bei den niedrigen Verdampfungstemperaturen bis zu -100°C nicht vollständig mit dem Kältemittel mischbar ist, neigt das Öl dazu, sich an den kalten Flächen im Verdampfer abzusetzen. Eine Ölschicht im Verdampfer verringert jedoch die Wärmeübertragung und die Leistung des Geräts. Die Erfindung trägt zur Lösung des Problems bei, da bei einem Abfluss des Kältemittels ohne Rückstau auch das Öl aus dem Verdampfer laufend abgeführt wird.

Das Innengehäuse kann an den inneren Oberflächen, insbesondere an den Seitenwänden, Lagereinrichtungen aufweisen, in welche Ablageelemente zum Ablegen kühlungsbedürftiger Güter einführbar sind. Damit kann das Raumangebot des Innenraums den Erfordernissen bzw. den kühlungsbedürftigen Gütern entsprechend angepasst werden.

Das Kühlsystem umfasst bevorzugt einen Wärmetauscher, der als vom Außengehäuse separates Modul am Außengehäuse befestigt und mit dem Verdampfer verbunden ist. Als Wärmetauscher kann beispielsweise ein Doppelrohrwärmetauscher eingesetzt werden. Während bisher jedoch Wärmetauscher in den Behälter integriert und mit eingeschäumt wurden, ist der Wärmetauscher gemäß der vorliegenden Erfindung kein integrales Teil mit dem Gehäuse des Kühlsystems, sondern wird zunächst als getrenntes Teil hergestellt. Das separat eingeschäumte Teil kann beispielsweise in einem Kompressorfach am Gehäuse angebracht werden. Die Verbindung zum Verdampfer wird durch entsprechende Anschlüsse hergestellt.

Die Aufgabe der Erfindung wird auch gelöst durch ein Verfahren zur Herstellung einer Verdampferplatine für ein Kühlsystem gemäß Anspruch 1 durch die Merkmale des Kennzeichnenden Teils von Anspruch 16.

Das Herstellungsverfahren eignet sich insbesondere auch beim Einsatz von Edelstahlplatten. Es ist einfach und kostengünstig.

Die Platten werden insbesondere durch Linienschweißen miteinander verbunden. Die Schweißlinien oder -nähte sind dabei von einem seitlichen Rand der Platten, ausgehend in Richtung Mitte der Platten nach unten geneigt, angeordnet. Zusätzliches Punktschweißen kann beispielsweise mittels eines Lasers durchgeführt werden.

Die Luft wird bevorzugt als Druckluft, insbesondere mit einem Druck von ca. 150 bar, zwischen die Platten eingeblasen, um wenigstens eine der Platten zur Ausbildung des Kanals für das Kältemittel plastisch zu verformen.

Die Platten sind bevorzugt aus rostfreiem Edelstahl hergestellt.

Die Platten können unterschiedliche Dicke aufweisen. Beim Einbringen der Pressluft wird in diesem Fall die dünnere Platte wesentlich stärker verformt als die dickere. In einer Näherung wird ausschließlich die dünnere Platte verformt. Diese weist entsprechend eine größere Oberfläche auf, die für einen effektiveren Wärmeaustausch genutzt werden kann. Die zum Außengehäuse gewandte Seite ist dagegen im Wesentlichen flach. Aus anderen Überlegungen heraus, beispielsweise aus Gründen der Oberflächenbeschaffenheit der Innenwand des Kühlgeräts, kann jedoch die verformte Seite der Platine auch zur Außenwand des Gehäuses gerichtet sein. Als mögliche Dicken für die Edelstahlplatten können beispielhaft 1 mm bzw. 2,5 mm angegeben werden.

Durch das Einbringen von Luft wird wenigstens eine der Platten plastisch so verformt, dass Bereiche mit einem Zwischenraum zwischen den Platten ausgebildet werden, die den Kanal bilden.

Die Bereiche mit einem Zwischenraum zwischen den Platten sind insbesondere zwischen den Schweißnähten ausgebildet. Die dünnere der beiden Platten verformt sich plastisch während der Beaufschlagung mit Druckluft in den Bereichen zwischen den Schweißpunkten bzw. -linien. Durch die Wölbungen entsteht ein gewünschtes Kanalbild mit vorgegebenen Querschnitten.

Weitere Merkmale und Vorteile der Erfindung werden anhand der nachfolgend beschriebenen bevorzugten Ausführungsform sowie anhand der beigefügten Figuren ersichtlich. Es zeigen:
- Fig. 1:: eine Frontansicht des erfindungsgemäßen Kühlsystems;
- Fig. 2:: eine Schnittansicht eines Ausschnitts einer Verdampferplatine gemäß der vorliegenden Erfindung;
- Fig. 3:: eine Draufsicht auf eine Verdampferplatine zur seitlichen Anordnung im Kühlgerät gemäß der vorliegenden Erfindung; und
- Fig. 4:: eine für den Deckenbereich eines Kühlgeräts bestimmte Verdampferplatine welche nicht zur vorliegenden Erfindung gehört.

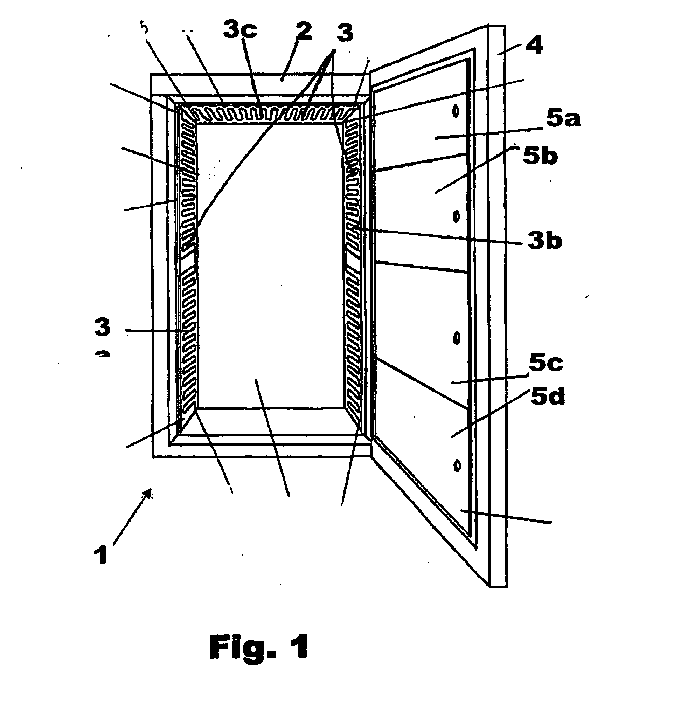

In Fig. 1 ist ein Kühlgerät 1 dargestellt, das ein Außengehäuse 2 und ein Innengehäuse umfasst. Das Innengehäuse wird wenigstens teilweise durch einen Verdampfer 3 gebildet, der seinerseits im Wesentlichen aus Verdampferplatinen 3a, 3b und 3c zusammengesetzt ist. Die Verdampferplatinen 3a und 3b bilden jeweils Seitenwände des Innengehäuses, die Verdampferplatine 3c den Deckenbereich des Innengehäuses. Die Platinen können jedoch auch andere Innenraumbereiche abdecken. Die Verdampferplatinen 3a, 3b und 3c stehen in direktem Kontakt mit dem Innenraum des Kühlgeräts 1. Auf diese Weise wird eine hohe Effizienz bei der Kühlleistung und damit eine Senkung des Energieverbrauchs erreicht, da die Kühlung des Innenraums über lediglich eine Materialgrenze erfolgt.

Der Zwischenraum zwischen dem Innengehäuse bzw. Verdampfer 3 und dem Außengehäuse 2 kann bspw. mit einem wärmeisolierenden Material, vorzugsweise einem isolierschaumstoff, ausgefüllt sein. Dadurch wird eine Kälteisolation zwischen dem durch das Innengehäuse gebildeten Innenraum des Kühlgeräts 1 und dem Außengehäuse 2 erreicht. Gleichzeitig kann der flüssig eingebrauchte und später aushärtende Isolierschaumstoff als Abstandshalter zwischen den Gehäuseteilen 2 und 3 wirken.

Die Erfindung soll jedoch nicht auf diese Art von Fixierung beschränkt sein. Der das Innengehäuse bildende Verdampfer 3 kann beispielsweise mittels Haltevorrichtungen an einer zwischen Außen- und Innengehäuse zusätzlich eingezogenen Zwischenwand fixiert sein. Der zwischen der Außenwand und der Zwischenwand gebildete Zwischenraum ist entsprechend dem obigen Ausführungsbeispiel mit dem Isolierschaumstoff ausgeschäumt. Die Verdampferplatine sowie die Ausgestaltung und Anordnung der Platinen untereinander entspricht dabei der oben beschriebenen.

Der Innenraum des Kühlgeräts 1 ist durch eine Zugangsöffnung, die vorzugsweise an der Vorderseite des Kühlgeräts 1 angeordnet ist, zugänglich. Das Außengehäuse 2 weist eine wärmeisolierte Außentür 4 auf. Die Innentür 5 ist segmentiert ausgebildet und ebenfalls wärmeisoliert. Sie besteht aus mehreren klappenartigen Segmenten 5a, 5b, 5c und 5d, die unabhängig von der Außentüre 4 bedient werden können. Die Segmente 5a, 5b, 5c und 5d können zudem unabhängig voneinander geöffnet und geschlossen werden. Dadurch wird ein gezielter Zugriff in den Innenraum des Kühlgeräts 1 ermöglicht, ohne die Kühlwirkung in den nicht geöffneten Bereichen zu beeinträchtigen.

Die Außentür 4 ist ähnlich dem Kühlgerätgehäuse vorzugsweise doppelwandig ausgeführt, so dass sich zwischen Außen- und Innengehäuse der Tür ein Zwischenraum bildet, der, ebenso wie der Zwischenraum zwischen Außengehäuse 2 und Innengehäuse, mit Isolierschaum ausschäumbar ist.

Das Kühlgerät 1 weist zudem ein Kühlaggregat auf, das neben dem Verdampfer 3 einen Kondensator und einen Wärmetauscher (beide nicht dargestellt) umfasst. Der Wärmetauscher kann bspw. ein Doppelrohrwärmetauscher sein. Das Kühlaggregat kann aus einem Kaskadensystem mit zwei getrennten Kompressorkreisläufen bestehen. Auf der Hochtemperaturseite wird z.B. das Kältemittel R404A verwendet, das sich an einem Kondensator bei Raumtemperatur verflüssigt und im Kaskadenwärmetauscher das Kältemittel, z.B. R508B, der Niedertemperaturseite kühlt. Das Kältemittel R508B verflüssigt sich im Kaskadenwärmetauscher und wird danach in die Verdampferplatinen eingespritzt.

In einer bevorzugten Ausführungsform, welche jedoch nicht in den Figuren dargestellt ist, weist das Innengehäuse 3 zudem an den inneren Oberflächen, insbesondere an den Seitenwänden, geeignete Lagereinrichtungen auf, in welche entsprechend ausgestaltete Ablageelemente oder Ablageböden einführbar sind, um das Raumangebot des Innenraums 4 den Erfordernissen bzw. den kühlungsbedürftigen Gegenständen entsprechend anzupassen. Eine größenmäßige Anpassung der Anzahl der Ablageelemente an die oben beschriebene vorzugsweise in einer Mehrzahl von Segmenten 5a-5d aufgegliederte Innentüre ist denkbar.

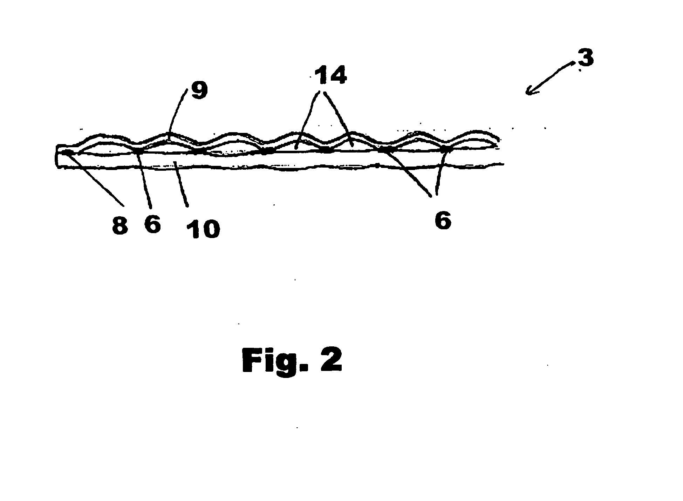

Die Figur 2 zeigt schematisch eine der Verdampferplatinen 3a, 3b, 3c im Querschnitt. Die Platine 3a besteht im Wesentlichen aus zwei rostfreien Stahlplatten 9 und 10 unterschiedlicher Dicke. Bspw. weist die Platte 10 eine Dicke von 2,5 mm, die Platte 9 eine Dicke von 1 mm auf.

Während des Herstellungsprozesses werden die Platten 9 und 10 übereinander gelegt und justiert. Die Außenbereiche der aneinander liegenden Platten 9 und 10 werden wenigstens abschnittsweise mittels einer dichtenden Schweißnaht 8 (Schweißlinie) verbunden. Außerdem werden zur Verbindung der beiden Platten 9 und 10 Schweißpunkte 6 mittels Punktschweißen in vorgegebenen Abständen ausgebildet.

Die dünnere der beiden Stahlplatten 9 wird im Folgenden durch Einbringen von Druckluft, bspw. mit einem Druck von 150 bar, zwischen den Schweißnähten 6 bzw. Schweißpunkten 8 leicht gewölbt, so dass zwischen den Platten 9 und 10 ein Kanal 14 zum Durchfluss eines Kältemittels entsteht. Die Schweißnaht 8 bildet eine Begrenzung des Kanals 14 im seitlichen Randbereich der Platten 9 und 10. Wie weiter unten beschrieben wird, sind zusätzliche Schweißnähte bzw. -linien vorgesehen, um einen von einem Einlass zu einem Auslass für das Kältemittel verlaufenden Kanal festzulegen.

Die Schweißpunkte 6 werden so angeordnet, dass eine gewünschte Auswölbung der dünnen Stahlplatte 9 erreicht wird. Dadurch entstehen definierte Durchgangskanäle 14. Zudem wird die Struktur des Verdampfers 3 stabilisiert. Die Oberfläche der ausgewölbten dünneren Platte 9 kann bei der Anordnung der Verdampferplatinen 3a, 3b und 3c im Kühlgerät nach innen gerichtet werden, da sich die vergrößerte Oberfläche der Platte 9 besonders gut für die Übertragung der Verdampfungswärme vom Kühlraum an das Kältemittel eignet. Bedarfsweise kann die verformte Oberfläche jedoch auch zum Außengehäuse 2 hin ausgerichtet werden.

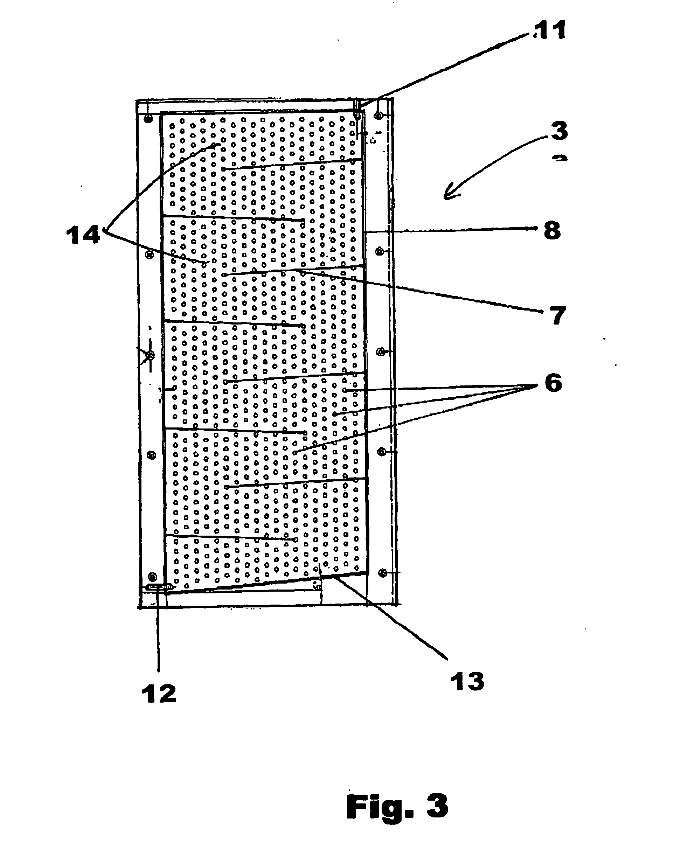

Die Figur 3 zeigt eine der seitlich angeordneten Verdampferplatinen 3a, 3b in einer Draufsicht. Zwei in der Blattebene übereinander liegende Stahlplatten sind über nahezu den gesamten Umfangsbereich durch eine Schweißnaht 8 miteinander verbunden. Zudem weist die Verdampferplatine 3a Schweißpunkte 6 als zusätzliche Verbindung zwischen den übereinander liegenden Platten auf. Zwischen den Schweißpunkten 6 und Schweißlinien 8 erstreckt sich ein Kanal 14, der durch Auswölbung wenigstens einer der übereinander angeordneten Platten zum Durchleiten des Kältemittels gebildet ist, von einem Einlass 11 zu einem Auslass 12 durch die Verdampferplatine 3a hindurch.

Vom Randbereich nach innen erstrecken sich weitere Schweißlinien bzw. Schweißnähte 7, um eine nach Möglichkeit im Wesentlichen schlangenartige oder mäanderartige Durchleitung des Kältemittels durch die Verdampferplatine 3a zu bewerkstelligen. Das Kältemittel wird durch einen Einlass 11 von oben her zugeführt und fließt durch den Kanal 14 in Richtung eines Auslasses 12 im unteren Bereich der Verdampferplatine 3a. Durch die Schweißpunkte 6 und die Schweißlinien 7 wird das Kältemittel beim Durchfluss durch die Verdampferplatine 3a nahezu über die gesamte Oberfläche der Platine verteilt. Auf diese Weise wird eine homogene Temperatur über nahezu die gesamte Oberfläche und somit eine hohe Effizienz beim Kälteübergang erreicht.

Die Schweißlinien 7 sind, vom seitlichen Rand der Platten ausgehend, in Richtung Mitte (und darüber hinaus) leicht nach unten geneigt, um einen Stau des Kältemittels beim Durchfluss zu verhindern. Die untere Abgrenzung 13 des Kanals 14 und die dazu gehörige Schweißnaht ist ebenfalls in Richtung zum Auslass 12 hin geneigt, um einen zuverlässigen Abfluss des Kältemittels zu gewährleisten.

Diese Maßnahmen sind insbesondere wichtig, da sich auf diese Weise das mitgeführte Öl aus dem Kompressor des Kühlaggregats nicht staut, sondern abgeführt wird. Eine Ölschicht im Verdampfer würde die Wärmeübertragung und die Leistung des Geräts verringern.

Außerdem kann zur Lösung dieses Problems zu dem zum Betrieb des Kühlsystems bestimmten Kältemittel ein zusätzliches Kältemittel zur Erhöhung der Mischbarkeit des Kältemittels mit Öl zugemischt werden. Synthetische Öle (z.B. Polyolesteröle) sind beispielsweise mit synthetischen Kältemitteln kompatibel. Als zusätzliches Kältemittel wird im vorliegenden Fall Ethan verwendet. Ethan kann dem Kältemittel R508B in einem bestimmten Verhältnis (etwa bis zu ca. 5,6 %) zugesetzt werden, ohne dass die Mischung brennbar wird. Die Mischung Ethan/R508B weist außerdem einen besseren Wirkungsgrad als reines R508B auf. Durch den Ethan-Zusatz wird jedenfalls die Mischbarkeit des Öls mit dem Kühlmittel gewährleistet und die Ölrückführung vom Verdampfer zum Kompressor verbessert.

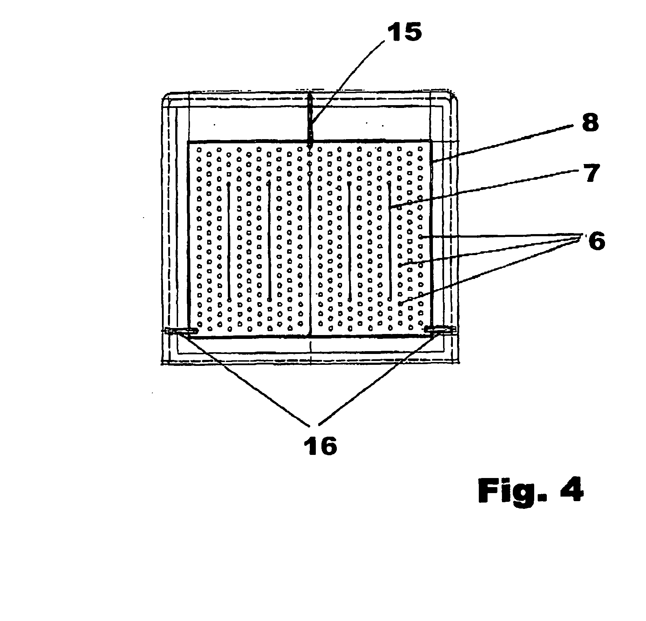

In der Figur 4 ist eine deckenseitige Verdampferplatine 3c in einer Draufsicht dargestellt, welche nicht zur vorliegenden Erfindung gehört. Sie besteht ebenfalls aus zwei bezüglich der Blattebene übereinander fixierten Edelstahlplatten, von denen wenigstens eine gewölbt ist, so dass zwischen den Verbindungspunkten und -linien Kanäle zum Durchfluss eines Kältemittels entstehen. Das Kältemittel wird der Verdampferplatine 3c durch eine zentrale Zufuhrleitung 15 zugeführt. Im Randbereich der übereinander angeordneten Platten sind die Edelstahlplatten durch eine Schweißnaht 8 miteinander verbunden. Durch die linienartigen Schweißverbindungen 7 und die Schweißpunkte 6, die die Stahlplatten verbinden, wird das durchfließende Kältemittel über einen großen Oberflächenbereich der Platine 3c möglichst gleichmäßig verteilt.

Über zwei Auslässe 16, die mit Einlässen 11 (vgl. Fig. 3) mit den seitlichen Verdampferplatinen 3a und 3b verbunden sind, wird das Kältemittel in die Seitenbereiche des Verdampfers 3 gebracht. Die seitlich angeordneten Verdampferplatinen 3a und 3b werden also über die deckenseitige Verdampferplatine 3c über jeweils einen Einlass mit dem Kältemittel versorgt.

Nach dem Durchgang durch die Seitenplatinen 3a, 3b fließt das Kältemittel ab und wird in einen Doppelrohrwärmetauscher geleitet. Das Kältemittel weist beim Eintritt in den Wärmetauscher noch eine sehr niedrige Temperatur, bspw. -90°C, auf. Im Wärmetauscher wird das Kältemittel erwärmt und dann dem Kompressor zugeführt.

Die Verdampferplatinen 3a, 3b und 3c weisen jeweils einen über praktisch die gesamte Oberfläche verlaufenden Kanal 14 auf. Auf diese Weise wird eine möglichst große und in ihrer Temperaturverteilung relative homogene Oberfläche bereitgestellt, über die die Kühlung des Innenraumes des Kühlgeräts 1 erfolgt.

Für den Betrieb des Kühlsystems können bekannte geeignete Kältemittel eingesetzt werden. Insbesondere sollen im Rahmen dieser Erfindung Kältemittel eingesetzt werden, die Verdampfungstemperaturen bis zu -100°C aufweisen.

## Patentansprüche

1. Kühlsystem (1) umfassend ein wärmeisolierendes Außengehäuse (2) und ein Kühlaggregat mit einem Verdampfer (3), wobei der Verdampfer (3) wenigstens eine flächig ausgebildete Verdampferplatine (3a, 3b, 3c) aufweist, die wenigstens zwei Platten (9, 10) umfasst, die so geformt und aneinander gefügt sind, dass zwischen den Platten (9, 10) ein Kanal (14) für ein Kältemittel ausgebildet ist, der eine untere Abgrenzung (13) aufweist, wobei die Verdampferplatine (3a, 3b, 3c) wenigstens einen Einlass (11) für das Kältemittel und wenigstens einen Auslass (12) für das Kältemittel aufweist, wobei die Platten (9, 10) durch Schweißnähte (7, 8, 13) miteinander verbunden sind und die Schweißnähte (7) von einem seitlichen Rand der Platten (9, 10) ausgehend derartig angeordnet sind, dass der zwischen den Platten (9, 10) gebildete Kanal (14) für das Kältemittel im Wesentlichen schlangenartig bzw. mäanderartig verläuft, **dadurch gekennzeichnet, dass** die von dem seitlichen Randbereich der Platten (9, 10) ausgehenden Schweißnähte (7) in Richtung Mitte der Platten (9, 10) nach unten geneigt angeordnet sind, sowie die untere Abgrenzung (13) des Kanals (14) und die dazugehörige Schweißnaht ebenfalls in Richtung zum Auslass (12) geneigt sind, so dass das Kältemittel unter dem Einfluss der Schwerkraft ohne Rückstau abfließen kann.

2. Kühlsystem (1) nach Anspruch 1, **dadurch gekennzeichnet, dass** die Platten (9, 10) durch die Schweißnähte (7, 8, 13) und Schweißpunkte (6) miteinander verbunden sind.

3. Kühlsystem (1) nach Anspruch 1, **dadurch gekennzeichnet, dass** wenigstens eine der Platten (9) plastisch so verformt ist, dass Bereiche mit einem Zwischenraum zwischen den Platten (9, 10) ausgebildet sind, die den Kanal (14) bilden.

4. Kühlsystem (1) nach Anspruch 3, **dadurch gekennzeichnet, dass** die Bereiche mit einem Zwischenraum zwischen den Platten (9, 10) zwischen den Schweißnähten ausgebildet sind.

5. Kühlsystem (1) nach Anspruch 2, **dadurch gekennzeichnet, dass** wenigstens eine der Platten (9) plastisch so verformt ist, dass Bereiche mit einem Zwischenraum zwischen den Platten (9, 10) ausgebildet sind, die den Kanal (14) bilden, wobei die Bereiche mit einem Zwischenraum zwischen den Platten (9, 10) zwischen den Schweißnähten und den Schweißpunkten ausgebildet sind.

6. Kühlsystem (1) nach einem der vorherigen Ansprüche, **dadurch gekennzeichnet, dass** wenigstens eine der Platten (9, 10) der Verdampferplatine (3a, 3b, 3c) aus Edelstahl, insbesondere aus rostfreiem Stahl, hergestellt ist.

7. Kühlsystem (1) nach einem der vorhergehenden Ansprüche, **dadurch gekennzeichnet, dass** die beiden aneinander gefügten Platten (9, 10) der Verdampferplatine (3a, 3b, 3c) aus Edelstahl, insbesondere aus rostfreiem Stahl, hergestellt sind.

8. Kühlsystem (1) nach einem der vorhergehenden Ansprüche, **dadurch gekennzeichnet, dass** die Platten (9, 10) unterschiedliche Dicke aufweisen.

9. Kühlsystem (1) nach einem der vorhergehenden Ansprüche, **dadurch gekennzeichnet, dass** das Kühlsystem (1) ein Innengehäuse zur Ausbildung eines Innenraumes zur Aufbewahrung kühlungsbedürftiger Güter aufweist und das Innengehäuse wenigstens teilweise durch den flächigen Verdampfer (3) gebildet wird.

10. Kühlsystem (1) nach Anspruch 9, **dadurch gekennzeichnet, dass** der Verdampfer (3) wenigstens zwei Verdampferplatinen (3a, 3b) aufweist, die wenigstens teilweise die Seitenbereiche des Innengehäuses bilden.

11. Kühlsystem (1) nach Anspruch 10, **dadurch gekennzeichnet, dass** der Verdampfer (3) wenigstens eine weitere Verdampferplatine (3c) aufweist, die wenigstens teilweise den Deckenbereich des Innengehäuses bildet.

12. Kühlsystem (1) nach einem der Ansprüche 10 oder 11, **dadurch gekennzeichnet, dass** das Innengehäuse an den inneren Oberflächen, insbesondere an den Seitenwänden, Lagereinrichtungen aufweist, in welche Ablageelemente zum Ablegen kühlungsbedürftiger Güter einführbar sind.

13. Kühlsystem (1) nach einem der vorhergehenden Ansprüche, **dadurch gekennzeichnet, dass** zu dem zum Betrieb des Kühlsystems (1) bestimmten Kältemittel ein zusätzliches Kältemittel zur Erhöhung der Mischbarkeit des Kältemittels mit Öl zugemischt ist.

14. Kühlsystem (1) nach Anspruch 13, **dadurch gekennzeichnet, dass** das zugemischte Kältemittel Ethan umfasst.

15. Kühlsystem (1) nach einem der vorhergehenden Ansprüche, **dadurch gekennzeichnet dass** das Kühlsystem (1) einen Wärmetauscher umfasst, der als vom Außengehäuse (2) separates Modul am Außengehäuse befestigt und mit dem Verdampfer (3) verbunden ist.

16. Verfahren zur Herstellung einer Verdampferplatine (3a, 3b, 3c) für ein Kühlsystem (1) nach einem der vorhergehenden Ansprüche, wobei die Verdampferplatine (3a, 3b, 3c) wenigstens einen Einlass (11) für das Kältemittel und wenigstens einen Auslass (12) für das Kältemittel aufweist, **gekennzeichnet durch** folgende Schritte:
- Bereitstellen wenigstens zweier Platten (9, 10);
- Ausrichten der Plattenflächen gegeneinander;
- Verbinden der Platten (9, 10) **durch** Verschweißen der Platten (9, 10) **durch** Schweißnähte (7, 8, 13), wobei die Schweißnähte (7) von einem seitlichen Rand der Platten (9, 10) ausgehend in Richtung Mitte der Platten (9, 10) nach unten geneigt angeordnet sind; und
- Ausbildung eines Kanals (14) zwischen den Platten (9, 10) **durch** Einbringen von Luft zwischen die Platten.

17. Verfahren nach Anspruch 16, **dadurch gekennzeichnet, dass** das Verbinden der Platten (9, 10) durch Verschweißen der Platten (9, 10) durch die Schweißnähte (7, 8, 13) und Schweißpunkte erfolgt.

18. Verfahren nach Anspruch 16, **dadurch gekennzeichnet, dass** durch das Einbringen von Luft wenigstens eine der Platten (9, 10) plastisch so verformt ist, dass Bereiche mit einem Zwischenraum zwischen den Platten (9, 10) ausgebildet werden, die den Kanal (14) ausbilden.

19. Verfahren nach Anspruch 18, **dadurch gekennzeichnet, dass** die Bereiche mit einem Zwischenraum zwischen den Platten (9, 10) zwischen den Schweißnähten (7, 8, 13) ausgebildet sind.

20. Verfahren nach Anspruch 17, **dadurch gekennzeichnet, dass** durch das Einbringen von Luft wenigstens eine der Platten (9, 10) plastisch so verformt ist, dass Bereiche mit einem Zwischenraum zwischen den Platten (9, 10) ausgebildet werden, die den Kanal (14) ausbilden, wobei die Bereiche mit einem Zwischenraum zwischen den Platten (9, 10) zwischen den Schweißnähten (7, 8, 13) und den Schweißpunkten ausgebildet sind.

21. Verfahren nach einem der Ansprüche 16 bis 20, **dadurch gekennzeichnet, dass** die Luft als Druckluft, insbesondere mit einem Druck von ca. 150 bar, zwischen die Platten (9, 10) eingeblasen wird, um wenigstens eine der Platten (9) zur Ausbildung des Kanals (14) für das Kältemittel plastisch zu verformen.

22. Verfahren nach einem der Ansprüche 16 bis 21, **dadurch gekennzeichnet, dass** die Platten (9, 10) aus rostfreiem Edelstahl hergestellt sind.

23. Verfahren nach einem der Ansprüche 16 bis 22, **dadurch gekennzeichnet, dass** die Platten (9, 10) unterschiedliche Dicke aufweisen.

## Claims

1. A cooling system (1) including a heat insulating outer housing (2) and a cooling unit with an evaporator (3), wherein the evaporator (3) includes at least one planar evaporation panel (3a, 3b, 3c), which includes at least two plates (9, 10), which are so shaped and connected together that a passage (14) for a cooling medium is formed, which has a lower boundary (13), wherein the evaporation panel (3a, 3b, 3c) has at least one inlet (11) for the cooling medium and at least one outlet (12) for the cooling medium, wherein the plates (9, 10) are connected together by weld seams (7, 8, 13) and the weld seams (7) are arranged, starting from a lateral edge of the plate (9, 10), such that the passage (14) for the cooling medium defined between the plates (9, 10) extends in a substantially serpentine or sinuous manner, **characterised in that** the weld seams (7), starting from the lateral edge region of the plates (9, 10) are arranged in the direction of the centre of the plates (9, 10) and inclined downwardly and the lower boundary (13) of the passage (14) and the associated weld seam are also inclined in the direction towards the outlet (12) so that the cooling medium can drain away under the influence of gravity without backing up.

2. A cooling system (1) as claimed in Claim 1, **characterised in that** the plates (9, 10) are connected together by the weld seams (7, 8, 13) and weld points (6).

3. A cooling system (1) as claimed in Claim 1, **characterised in that** at least one of the plates is deformed plastically so that regions are defined with a gap between the plates (9, 10), which constitute the passage (14).

4. A cooling system (1) as claimed in Claim 3, **characterised in that** the regions with a gap between the plates (9, 10) are defined between the weld seams.

5. A cooling system (1) as claimed in Claim 2, **characterised in that** at least one of the plates is deformed plastically so that regions are defined with a gap between the plates (9, 10), which define the passage (14), wherein the regions with a gap between the plates (9, 10) are defined between the weld seams and the weld points.

6. A cooling system (1) as claimed in one of the preceding claims, **characterised in that** at least one of the plates (9, 10) of the evaporation panel (3a, 3b, 3c) is made of high quality steel, particularly stainless steel.

7. A cooling system (1) as claimed in one of the preceding claims, **characterised in that** the two connected plates (9, 10) of the evaporation panel (3a, 3b, 3c) are made of high quality steel, particularly stainless steel.

8. A cooling system (1) as claimed in one of the preceding claims, **characterised in that** the plates (9, 10) have different thicknesses.

9. A cooling system (1) as claimed in one of the preceding claims, **characterised in that** the cooling system (1) has an inner housing (1) for defining an internal space for storing goods requiring cooling and the inner housing is defined at least partially by the laminar evaporator (3).

10. A cooling system (1) as claimed in Claim 9, **characterised in that** the evaporator (3) includes at least two evaporation panels (3a, 3b), which at least partially define the side regions of the inner housing.

11. A cooling system (1) as claimed in Claim 10, **characterised in that** the evaporator (3) includes at least one further evaporation panel (3c), which at least partially defines the cover region of the inner housing.

12. A cooling system (1) as claimed in one of Claims 10 or 11, **characterised in that** the inner housing has storage devices on the inner surfaces, particularly on the side walls, into which shelf elements may be inserted on which goods requiring cooling may be placed.

13. A cooling system (1) as claimed in one of the preceding claims, **characterised in that** mixed into the cooling medium intended for operation of the cooling system (1) there is an additional cooling medium to increase the miscibility of the cooling medium with oil.

14. A cooling system (1) as claimed in Claim 13, **characterised in that** the cooling medium which is mixed in includes ethane.

15. A cooling system (1) as claimed in one of the preceding claims, **characterised in that** the cooling system (1) includes a heat exchanger, which is fastened to the outer housing as a module separate from the outer housing and is connected to the evaporator (3).

16. A method of producing an evaporation panel (3a, 3b, 3c) for a cooling system (1) as claimed in one of the preceding claims, wherein the evaporation panel (3a, 3b, 3c) includes at least one inlet (11) for the cooling medium and at least one outlet (12) for the cooling medium, **characterised by** the following steps:
- providing at least two plates (9, 10);
- aligning the plate surfaces with respect to one another;
- connecting the plates (9, 10) by welding the plates (9, 10) by weld seams (7, 8, 13), wherein the weld seams (7) are arranged, starting from a lateral edge of the plates (9, 10), in the direction of the centre of the plates (9, 10) and inclined downwardly; and
- forming a passage (14) between the plates (9, 10) by introducing air between the plates.

17. A method as claimed in Claim 16, **characterised in that** the connection of the plates (9, 10) is effected by welding the plates (9, 10) by the weld seams (7, 8, 13) and weld points.

18. A method as claimed in Claim 16, **characterised in that** as a result of the introduction of air, at least one of the plates (9, 10) is deformed plastically so that regions are formed with a gap between the plates (9, 10), which constitute the passage (14).

19. A method as claimed in Claim 18, **characterised in that** the regions with a gap between the plates (9, 10) are formed between the weld seams (7, 8, 13).

20. A method as claimed in Claim 17, **characterised in that** as a result of the introduction of air at least one of the plates (9, 10) is plastically deformed so that regions with a gap between the plates (9, 10) are formed, which define the gap, wherein the regions with a gap between the plates (9, 10) are defined between the weld seams (7, 8, 13) and the weld points.

21. A method as claimed in one of Claims 16 to 20, **characterised in that** the air is injected between the plates (9, 10) in the form of compressed air, particularly at a pressure of ca. 150 bar, in order to plastically deform at least one of the plates (9) to form the passage (14) for the cooling medium.

22. A method as claimed in one of Claims 16 to 21, **characterised in that** the plates (9, 10) are made of stainless, high quality steel.

23. A method as claimed in one of Claims 16 to 22, **characterised in that** the plates (9, 10) have different thicknesses.

## Revendications

1. Système de refroidissement (1) comprenant un boîtier externe (2) isolant thermiquement et un groupe de refroidissement avec un évaporateur (3), l'évaporateur (3) comprenant une platine d'évaporateur (3a, 3b, 3c) de forme plate, qui comprend au moins deux plaques (9, 10), présentant une forme et assemblées entre elles de façon qu'un canal (14) pour un fluide de refroidissement soit formé entre les plaques (9, 10), qui comprend une délimitation inférieure (13), la platine d'évaporateur (3a, 3b, 3c) comprenant au moins une admission (11) pour le fluide de refroidissement et au moins un échappement (12) pour le fluide de refroidissement, les plaques (9, 10) étant reliées entre elles par des cordons de soudure (7, 8, 13) et les cordons de soudure (7) étant disposés, à partir d'un bord latéral des plaques (9, 10), de façon que le canal (14) pour le fluide de refroidissement, formé entre les plaques (9, 10), présente une forme de serpent ou des méandres, **caractérisé en ce que** les cordons de soudure (7) qui partent de la zone latéral des plaques (9, 10) sont inclinés vers le bas en direction du centre des plaques (9, 10), et la délimitation inférieure (13) du canal (14) et le cordon de soudure correspondant sont également inclinés en direction de l'échappement (12), de façon que le fluide de refroidissement puisse s'écouler sous l'effet de la gravité sans bourrage.

2. Système de refroidissement (1) selon la revendication 1, **caractérisé en ce que** les plaques (9, 10) sont reliées entre elles par des cordons de soudure (7, 8, 13) et des points de soudure (6).

3. Système de refroidissement (1) selon la revendication 1, **caractérisé en ce qu'**au moins une des plaques (9) est déformée de manière plastique de façon que des zones avec un espace intermédiaire entre les plaques (9, 10) sont formées, qui constituent le canal (14).

4. Système de refroidissement (1) selon la revendication 3, **caractérisé en ce que** les zones sont formées avec un espace intermédiaire entre les plaques (9, 10) entre les cordons de soudure.

5. Système de refroidissement (1) selon la revendication 2, **caractérisé en ce qu'**au moins une des plaques est déformée de manière plastique de façon que des zones avec un espace intermédiaire entre les plaques (9, 10) sont formées, qui constituent le canal (14), ces zones étant formées avec un espace intermédiaire entre les plaques (9, 10) entre les cordons de soudure et les points de soudure.

6. Système de refroidissement (1) selon l'une des revendications précédentes, **caractérisé en ce qu'**au moins une des plaques (9, 10) de la platine d'évaporateur (3a, 3b, 3c) est constituée d'acier noble, particulièrement d'acier inoxydable.

7. Système de refroidissement (1) selon l'une des revendications précédentes, **caractérisé en ce que** les deux plaques (9, 10), assemblées entre elles, de la platine d'évaporateur (3a, 3b, 3c) sont constituées d'acier inoxydable.

8. Système de refroidissement (1) selon l'une des revendications précédentes, **caractérisé en ce que** les plaques (9, 10) présentent des épaisseurs différentes.

9. Système de refroidissement (1) selon l'une des revendications précédentes, **caractérisé en ce que** le système de refroidissement (1) comprend un boîtier interne pour la formation d'un espace interne pour la conservation de produits nécessitant un refroidissement et le boîtier interne est constitué au moins partiellement de l'évaporateur plat (3).

10. Système de refroidissement (1) selon la revendication 9, **caractérisé en ce que** l'évaporateur (3) comprend deux platines d'évaporateur (3a, 3b) qui constituent au moins partiellement les zones latérales du boîtier interne.

11. Système de refroidissement (1) selon la revendication 10, **caractérisé en ce que** l'évaporateur (3) comprend au moins une autre platine d'évaporateur (3c), qui constitue au moins partiellement la zone de plafond du boîtier interne.

12. Système de refroidissement (1) selon l'une des revendications 10 ou 11, **caractérisé en ce que** le boîtier interne présente, aux surfaces internes, plus particulièrement aux parois latérales, des magasins dans lesquels des éléments de stockage souples peuvent être insérés pour le stockage de produits nécessitant un refroidissement.

13. Système de refroidissement (1) selon l'une des revendications précédentes, **caractérisé en ce que**, au fluide de refroidissement destiné au fonctionnement du système de refroidissement (1), est ajouté un fluide de refroidissement supplémentaire afin d'augmenter la miscibilité du fluide de refroidissement avec de l'huile.

14. Système de refroidissement (1) selon la revendication 13, **caractérisé en ce que** le fluide de refroidissement ajouté est de l'éthane.

15. Système de refroidissement (1) selon l'une des revendications précédentes, **caractérisé en ce que** le système de refroidissement (1) comprend un échangeur thermique qui est fixé, en tant que module distinct du boîtier externe (2) sur le boîtier externe et relié à l'évaporateur (3).

16. Procédé de fabrication d'une platine d'évaporateur (3a, 3b, 3c) pour un système de refroidissement (1) selon l'une des revendications précédentes, la platine d'évaporateur (3a, 3b, 3c) comprenant au moins une admission (11) pour le fluide de refroidissement et au moins un échappement (12) pour le fluide de refroidissement, **caractérisé par** les étapes suivantes :
- éalisation d'au moins deux plaques (9, 10) ;
- orientation des surfaces des plaques l'une contre l'autre ;
- raccordement des plaques (9, 10) par soudure des plaques (9, 10) par des cordons de soudure (7, 8, 13), les cordons de soudure (7) étant inclinés, à partir d'un bord latéral des plaques (9, 10), en direction du centre des plaques (9, 10) vers le bas ; et
- formation d'un canal (14) entre les plaques (9, 10) par l'introduction d'air entre les plaques.

17. Procédé selon la revendication 16, **caractérisé en ce que** le raccordement des plaques (9, 10) par soudure des plaques (9, 10) est effectué à l'aide des cordons de soudure (7, 8, 13) et des points de soudure.

18. Procédé selon la revendication 16, **caractérisé en ce que** l'introduction d'air permet de déformer au moins une des plaques (9, 10) de manière plastique de façon que des zones avec un espace intermédiaire entre les plaques (9, 10) sont formées, qui constituent le canal (14).

19. Procédé selon la revendication 18, **caractérisé en ce que** les zones avec un espace intermédiaire entre les plaques (9, 10) sont formées entre les cordons de soudure (7, 8, 13).

20. Procédé selon la revendication 17, **caractérisé en ce que** l'introduction d'air permet de déformer au moins une des plaques (9, 10) de manière plastique de façon que des zones avec un espace intermédiaire entre les plaques (9, 10) sont formées, qui constituent le canal (14), ces zones étant formées avec un espace intermédiaire entre les plaques (9, 10) entre les cordons de soudure (7, 8, 13) et les points de soudure.

21. Procédé selon l'une des revendications 16 à 20, **caractérisé en ce que** l'air est soufflé sous la forme d'air comprimé, plus particulièrement avec une pression d'environ 150 bars, entre les plaques (9, 10) afin de déformer de manière plastique au moins une des plaques (9) pour la formation du canal (14) pour le fluide de refroidissement.

22. Procédé selon l'une des revendications 16 à 21, **caractérisé en ce que** les plaques (9, 10) sont constituées d'acier inoxydable.

23. Procédé selon l'une des revendications 16 à 22, **caractérisé en ce que** les plaques (9, 10) présentent des épaisseurs différentes.
